# EUROPEAN PATENT SPECIFICATION

(11) **EP 2 339 798 B1**
(45) Date of publication and mention of the grant of the patent: **10.10.2012**
(21) Application number: 09180679.4
(22) Date of filing: 23.12.2009
(51) Int. Cl.: H04L 12/58

(54) **Method for partial loading and viewing a document attachment on a portable electronic device**
Verfahren zum teilweisen Laden und Ansehen von Dokumentanhängen auf einem tragbaren elektronischen Gerät
Procédé pour le chargement partiel et l'affichage d'un document en pièce jointe sur un dispositif électronique portable

(43) Date of publication of application: 29.06.2011
(73) Proprietor: Research In Motion Limited, Waterloo, ON N2L 3W8 (CA)
(72) Inventor: Dumitru, Dan, Mihai, Atlanta, GA 30328 (US); Arora, Rakesh, Kumar, Mississauga Ontario L4W 0B5 (CA)
(74) Representative: MERH-IP Matias Erny Reichl Hoffmann

(56) References cited:
- EP-A1- 1 708 098
- US-A1- 2007 067 474

## Description

### FIELD

The present disclosure relates to portable electronic devices, and more particularly to a method of partial loading and viewing a document attachment on a portable electronic device using a consistent interface across different applications.

### BACKGROUND

It is known in the wireless communication arts to send photographs, scanned documents, slide shows, PDF documents and other types of attachments in email messages or to download such documents from web sites. Each attachment is provided with a filename and is linked to an email message or web site in a known manner.

For example, it is known in the art to send a data request from a portable electronic device, such as a Personal Digital Assistant (PDA) or smart phone, to a server responsive to receipt of an email message at the portable electronic device that includes an attachment, and sending the data to the portable electronic device for display via an attachment viewer.

There is generally a delay between a request to view an attachment by a user and display of the attachment on the display screen of the device. The primary cause of the delay is server processing time and downloading the attachment to the portable device. Network speed is also a contributing factor when downloading large attachments.

EP 1 708 098 A1 discloses a process for previewing a table attachment on a mobile communication device, and upon identifying table content of interest, viewing and/or retrieving the entire table from an attachment server.

### SUMMARY

In one aspect there is provided a method for downloading an attachment for viewing on an attachment viewer of a portable electronic device, the method comprising: encapsulating, in a self-contained form, a DOM for a requested attachment; and communicating, in a self-contained form viewable on the attachment viewer, at least a portion of the requested attachment along with meta-data for subsequently locating said attachment In another aspect there is provided a method of saving partial attachment data in a portable electronic device, said method comprising: serializing and persisting an initial portion of an attachment and meta-data for subsequently locating said attachment on said portable electronic device; displaying said initial portion on said portable electronic device; and responsive to a subsequent request for said attachment de-serializing said initial portion and said meta-data; displaying said initial portion and sending a further data request for additional portions, wherein said further request includes said meta-data.

### BRIEF DESCRIPTION OF THE DRAWINGS

The embodiments will be better understood with reference to the following Figures in which like numerals denote like parts and in which:
Figure 1 is a schematic diagram of a wireless communication system;
Figure 2 is a block diagram of components of a portable electronic device according to an embodiment;
Figure 3 is a flowchart summarizing server-side operation for downloading attachment data in a format that can be viewed on the portable electronic device;
Figure 4 is a unified modeling language (UML) diagram showing communication between an invoking application, attachment viewer and attachment server of the communication system of Figure 1 for downloading data to the mobile electronic device of Figure 2;
Figure 5 is a class diagram of an attachment viewer of the mobile electronic device of Figure 2, according to an embodiment;
Figure 6 is a unified modeling language (UML) diagram showing communication between a browser, attachment viewer and attachment server of the communication system of Figure 1 for downloading data to the mobile electronic device of Figure 2;
Figure 7 is a flowchart showing server-side operation of a method for downloading data to an attachment viewer of the mobile electronic device of Figure 2; and
Figure 8 is a flowchart showing steps in persisting partial document data to the mobile electronic device of Figure 2.

### DETAILED DESCRIPTION

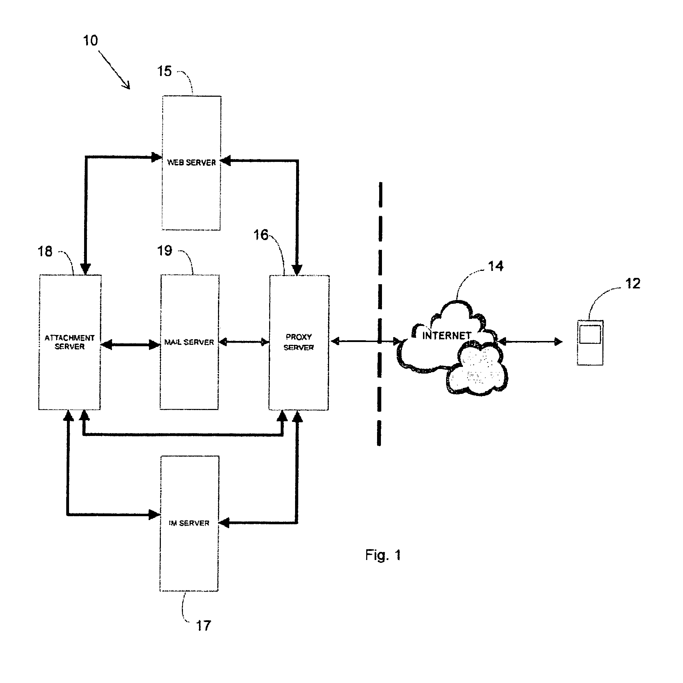

Referring to Figure 1, a communication system 10 for a mobile communication device 12 is generally shown. The mobile communication device 12 is operable to effect communications over a radio communications channel and communicates with a base station (not shown) while located within a coverage area that is defined by the base station. The base station is part of a wireless network that is in communication with the Internet 14, or other network such as a WAN. Data is delivered to the mobile communication device 12 via wireless transmission from the base station. Similarly, data is sent from the mobile communication device 12 via wireless transmission to the base station.

It will be appreciated that the mobile communication device 12 is movable within the coverage area and can be moved to coverage areas defined by other base stations. Further, as will be understood by one of ordinary skill in the art, wireless networks include GSM/GPRS, CDPD, TDMA, iDEN, Mobitex, DataTAC networks, EDGE, EVDO or UMTS and broadband networks such as Bluetooth and variants of 802.11.

A proxy server 16 handles client requests from the mobile communication device 12 for documents stored within an attachment server 18. The attachment server 18 communicates with the proxy server 16 to transmit attachments such as documents, spreadsheets, images, multimedia files, etc. for viewing via an attachment viewer of the mobile communication device 12 to allow a user to view attachments that are received in email messages. While only one server 18 is shown for illustration purposes, a person skilled in the art will understand that the attachment server 18 may alternatively be a network of attachment servers. Sources for the attachments stored within server 18 may include a web server 15, mail server 19, IM server 17, etc. Preferably the document data is downloaded to mobile communication device 12 in chunks of binary data in an attachment viewer readable format, for example Universal Content Stream (UCS) format.

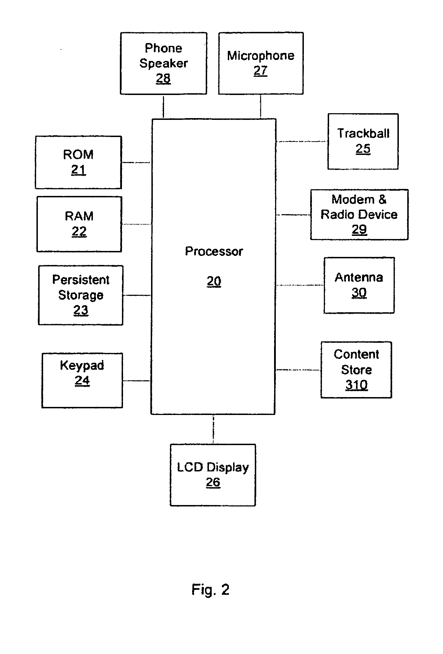

Referring now to Figure 2, a block diagram of certain components within the portable electronic device 12 is shown. In the present embodiment, the portable electronic device 12 is based on the computing environment and functionality of a wireless personal digital assistant (PDA). It will be understood, however, that the portable electronic device 12 is not limited to wireless personal digital assistants. Other portable electronic devices are possible, such as smart telephones, and laptop computers.

The portable electronic device 12 includes a processor 20 connected to a read-only-memory (ROM) 21 that contains a plurality of applications executable by the processor 20 that enables the portable electronic device 12 to perform certain functions including, for example, PIN message functions, SMS message functions and cellular telephone functions, and an attachment viewer application for viewing attachments (e.g. document attachments to emails or documents from other sources, such as web servers). The processor 20 is also connected to a random access memory unit (RAM) 22 and a persistent storage device 23, which are responsible for various storage functions of the portable electronic device 12. The processor 20 receives input from input devices such as a keypad 24 and trackball 25. The processor 20 outputs to various output devices, such as an LCD display 26. A microphone 27 and phone speaker 28 are connected to the processor 20 for cellular telephone functions. The processor 20 is also connected to a modem and radio device 29. The modem and radio device 29 is used to connect to wireless networks and transmit and receive voice and data communications through an antenna 30. A content store 31, which is generally a file storage system for the portable electronic device 12, is also provided.

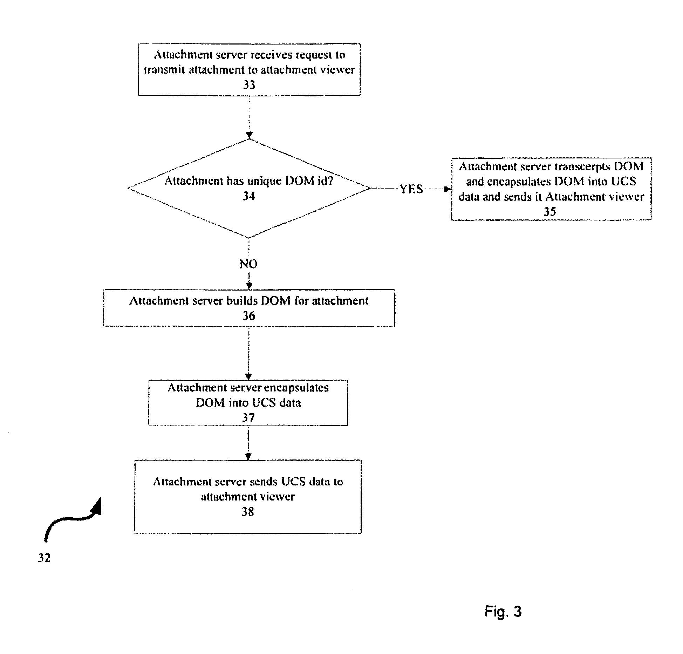

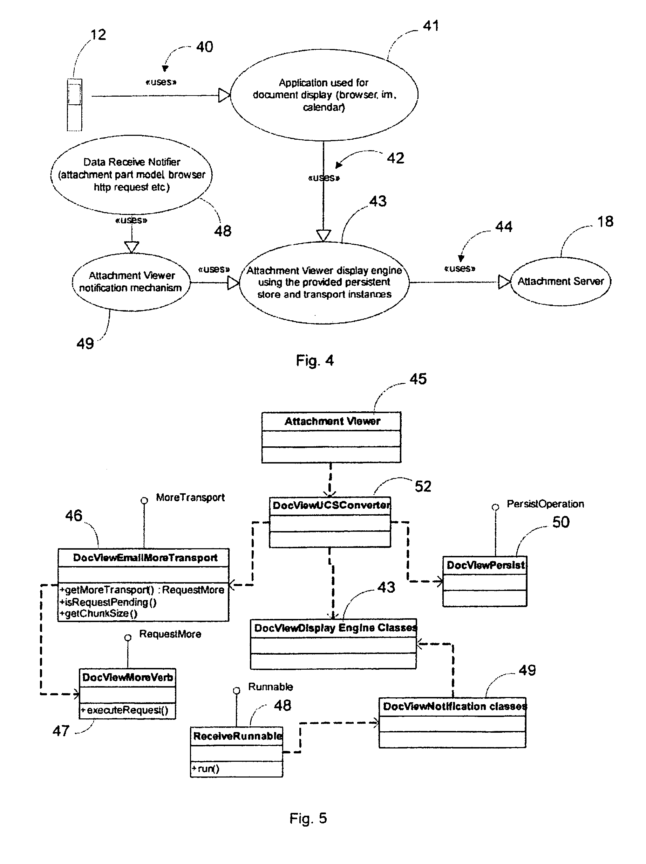

Request/view functionality for an attachment is provided by the client/server combination of attachment viewer within the portable electronic device 12 and the attachment server 18. Figure 3 depicts method 32, which summarizes the general steps taken by attachment server 18 in response to a request by the attachment viewer (discussed in greater detail below with reference to Figures 4 - 8) for attachment server 18 to transmit an attachment to the attachment viewer. At step 33, the attachment server 18 receives a request from attachment viewer to transmit an attachment to the attachment viewer. Upon receipt of this request, the attachment server 18 first determines if the attachment has a unique Document Object Model (DOM) id, as indicated at step 34. If so, this indicates that the attachment has been previously requested and can be retrieved from the attachment server 18. If the DOM was recently requested, it is retrieved from server cache, alternatively, the DOM is retrieved from a document database on the attachment server 18. The attachment server 18 then transcerpt the DOM and encapsulates the DOM into Universal Content Stream (UCS) data, which is a device-readable format that is readable by the attachment viewer, and sends the UCS data to the mobile electronic communications device 12, as indicated in step 35. The transcerption process generally includes preparing the DOM for transmission to mobile electronic communications device 12 and is described in United States Patent Application No. 2002/0161796, which is herein incorporated by reference.

If the attachment has not been previously requested, attachment server 18 builds a DOM that represents the attachment by parsing the attachment document (step 36). In this manner, a graph structure is built within attachment server 18 representing a map of the original attachment file. The DOM contains textual content, font, style and formatting attributes as well as layout attributes, such as page/slide size, positioning information (ie. x, y and z coordinates on the page), embedded graphics and tables, for example. DOM structure is well known and is disclosed in United States Patent Application No. 2006/0055693, which is herein incorporated by reference.

Once the DOM of the attachment is built, the attachment server 18 trascerpts and encapsulates the DOM in UCS data, as indicated at step 37. The UCS data is then sent to mobile electronic communications device 12 in chunks, as indicated at step 38. Each chunk is a self-contained data representation of a portion of the attachment. That is, there is sufficient data contained in a chunk to enable the attachment viewer to display the content of the chunk. Depending on the size of the chunks and the size of the attachment, the entire attachment can be transmitted in one chunk or in multiple chunks. Depending on the nature of the request from the attachment viewer, attachment server 18 can transmit the chunks in sequence or out of sequence. For example, if the attachment viewer requests the fifth page of an attachment, attachment server 18 can transmit the chunks corresponding to the fifth page, even if chunks for pages 1 to 4 have not been transmitted to the device 12.

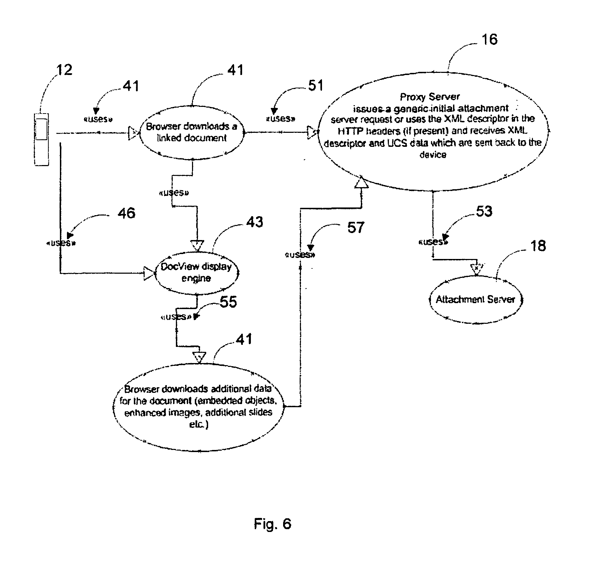

As shown in the UML diagram of Figure 4 upon receipt of a user request 40 for a document, the calling application 41 (e.g. email client, calendar) uses (42) an attachment viewer display engine 43 to issue a command (44) to the attachment server 18, by passing an XML string in the body of the request, as discussed in greater detail below. For attachments other than email or calendar attachments, the proxy server 16 constructs the initial request for the first data chunk and the attachment viewer 43 is invoked only after receiving the attachment server first response metadata (XML string) and data chunk (binary data), as discussed in greater detail below with reference to Figure 6. In the event that the server response string indicates that the document has been stored in cache memory (e.g. persistent storage 23), there is no need to download the document from the original URL location.

As discussed in greater detail below, the attachment viewer includes a user interface, which accepts user actions (42) for enhanced image data request, retrieval of an embedded object or the textual data for rendered slides/pages, etc.

Turning to the class diagram of Figure 5, if the document data is not found in the persistent store 23, the attachment viewer 45 public classes are used to issue the command or request (44) for the initial document data chunk (e.g. a More command or a RequestMore command issued by interfaces 46 and 47, respectively). A viewer callback interface 48 is provided for the invoking application 41 to be notified when user actions are selected. Attachment viewer meta-data is maintained and passed to the notified object for inclusion in subsequent requests to the proxy server 16. This provides the invoking application 41 with the ability to issue new data and update the display 30. Interface 48 uses attachment viewer response mechanism 49 to process responses from the attachment server 18. However, alternative configurations are possible, for example if the calling application 41 (e.g. browser) is actually invoked only after the initial data has been retrieved from the attachment server 18. In this case it is the proxy server 16 issues the initial data request.

The attachment viewer display engine 43 is invoked using a plug-in to the calling application. Application specific implementations of the persistence and transport interfaces 46, 47 and 50, are passed to the display engine 43 using rendering options of the plug-in architecture. Once displayed, display engine 43 renders the existing data in a consistent manner, makes data requests based on user input and is notified when data from server has arrived to update the display 30.

While the MoreTransport interface implementations 46 or 47 are optional, the PersistOperation must be valid when the display field is constructed, otherwise no data can be displayed. It is not required that the document data exist after a reset of the device 12. For example, the persistent store 23 can be session based and constructed in memory when document data chunks for a linked document are displayed (e.g. in the browser).

The PersistOperation provided by persistence interface 50 ensures that document data received from attachment server 18 via the available transport 46 or 47 is cached and retrieved in a similar manner and that the display engine 43 retrieves the data in a unified way. There are three generic keys used in accessing an atomic attachment in the persistent store 23 (int or long - message id for email, int or long - more part id for email, archive indicator - string indicating the archive index for a document in an archive). These values are used to initialize the display engine 43 and can have a different meaning for each calling application (e.g. a hash code for the downloaded url) or can be generic (except for the archive indicator which has a predefined meaning). These values are also used to route a received data response to the active display engine 43 displaying the particular document.

MoreTransport provides a mechanism for sending a request for data to the attachment server 18. The transport media can be email MORE, HTTP request etc. Common constraints for the MoreTransport implementation include that it accept and transport to the attachment server 18 an XML string descriptor and that it is able to receive an XML descriptor from the attachment server together with the binary data chunk.

DocViewUCSConverter 52 is a class used by the attachment viewer 45 in an embodiment, to register when the device 12 boots (i.e. starts or resets) so that it understands the MIME type "UCS". Thus, every binary data with this MIME type (a file with extension ucs or binary data in memory coming from a data connection with UCS MIME type) is routed through the attachment viewer architecture.

In addition to configuring the attachment viewer for uniform presentation of documents, as discussed above with reference to Figures 4 and 5, the invoking application 41 must also be appropriately configured. For example, where the invoking application 41 is a browser a listener interface should be implemented for communicating with callback interface 48, and the browser should be configured to make appropriate HTTP requests to the proxy server 16 (i.e. by constructing a request header, setting cmd, etc). When the server response has been received, the browser is configured to pass the data to the attachment viewer and update the display 30 (i.e. a *referrer* parameter is notified via DocView Notification classes 49). This 'referrer' is an intermediate class connected with the document viewer display classes 43. Likewise, where the invoking application 41 is an instant messaging application, a listener interface should also be implemented and the IM application should be configured to make appropriate IM requests to the proxy server 16 (i.e. by setting IM fields, etc). Also, where the invoking application 41 is an email client the aforenoted listening interface is used and the client is configured to make the appropriate emails requests to the proxy server 16.

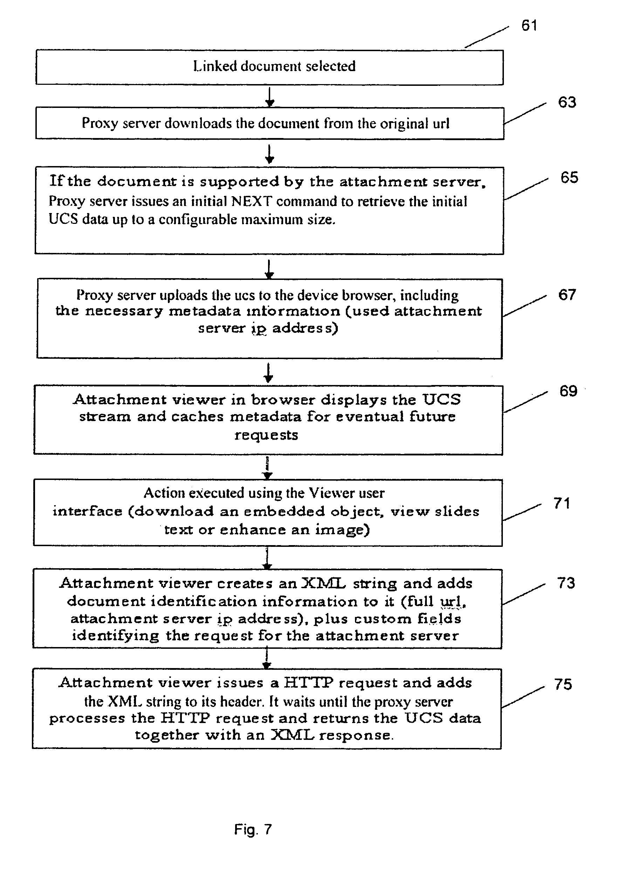

Turning now to Figures 6 and 7, operation of the proxy server 16 is described for downloading attachment server supported files using the device browser. In response to selection of a linked document 61, the browser uses 51 the proxy server 16 to download (63) the document from web server 15. More particularly, proxy server 16 analyses the linked file extension and provided that the document is of a type that is supported by the attachment server 18, issues a command to the attachment server 18. The command may be a generic initial attachment server request (53), or may use the XML descriptor in the HTTP headers to download the document from the attachment server 18. The proxy server 16 preferably issues the command to the server 18 after adding an MD5 encryption hash function, Origin Key, and XML tags, etc.

This functionality is implemented in the attachment viewer 45 by allowing it to open a browser channel (55) for document data communication and thereby make data requests (57).

If the requested document is of a type that is supported by attachment server 18, the resulting XML response and binary document data are sent back (67) to the device browser 45 via HTTP. The metadata information contains the initial XML attachment server response, as well. The XML response string is part of the HTTP headers for the particular request and it is accessible using a predefined property. The binary document data is sent to the device using a predefined content type (e.g. Universal Content Stream (UCS)).

The attachment viewer 43 detects this content type and is able to display (69) the initial data by using the input XML string and the binary data. The attachment viewer 45 sends such requests based on user input by adding the XML string to the HTTP headers property and issuing a GET HTTP request using the document download url. Proxy server 16 searches for the specific property in the HTTP request header and, if encountered, determines that the request is an attachment server request. Upon receiving the response from attachment server 18, proxy server 16 packages the XML descriptor in the http headers and sends it back to the device 12 together with the response binary document data. It should be noted that the XML string descriptor is not always the same; it is manipulated by attachment viewer 45 and server 16 by adhering to a predefined protocol. A correspondence between the initial proxy request and the attachment server ip address is saved in order to access the attachment server cache for subsequent requests from the device 12, and thereby eliminate the need for multiple downloads of the linked document from the web server.

In response to execution of an action (71) using the interface (46), such as to download an embedded object, view slides text, enhance image, etc., the attachment viewer creates (73) an XML string and adds the document ID to it (e.g. full url, attachment server IP address, etc.) as well as fields for identifying the request for the attachment server 18, sends (75) the request to the proxy server 16, and awaits response from the proxy server 16. The proxy server 16 adjusts the attachment server response to create a response XML string.

The following is an example XML string sent to the attachment viewer 45 upon the initial download of the linked document and display in the browser (note that the XML tags set forth below may not, in practice, be exactly as indicated (for example, extra tags are set forth and the <SIP> and <URL> tags are processed by proxy server 16 but never reach the attachment viewer 45):

```
 <BBASCMD>
      <CR>
           <FT>0.4</FT> // file type as returned by the attachment server to the MDS
       as response to the NEXT command
           <URL>document url</URL> // document full path
           <SIP>10.144.10.45</SIP> // used attachment server ip address
       </CR>
 </BBASCMD>
```

The following is an example XML request added by the attachment viewer 45 to the HTTP request for the case of retrieving an embedded object:

```
 <BBASCMD>
      <CD>NEXT</CD>
      <CP>
           <PARTIDX>999</PARTIDX> // Full Content part index
           <DOMID>i0\i99</DOMID> // unique dom ID for the embedded object
           <URL>document url</URL> // document full path
           <SIP>10.144.10.45</SIP> // attachment server ip address to use
      </CP>
 </BBASCMD>
```

The following is an example response XML string retrieved from the HTTP response:

```
 <BBASCMD>
      <CR>
           <PARTIDX>999</PARTIDX> // requested part index
           <DOMID>i0\i99</DOMID> // unique dom ID for the embedded object
           <ERRNO>0</ERRNO> // 0 if no error, error value otherwise
           <URL>document url</URL> // document full path
           <SIP>10.144.10.45</SIP> // attachment server ip address used
      </CR>
 </BBASCMD>
```

The following is an example XML request sent by the attachment viewer 45 for enhancing a slide/page:

```
 <BBASCMD>
      <CD>RENDER</CD>
      <CP>
           <PARTIDX>1003</PARTIDX> // request part index for enhance
           <SArDOMID>i0</SArDOMID> // slide/page dom ID to enhance
           <DI>853x640x16</DI> // desired pixel size and color depth after enhance
      operation
           <IRD>0x0x960x720</IRD> // desired rectangle to be enhanced (source
      coordinates)
           <URL>document url</URL> // document full path
           <SIP>10.144.10.45</SIP> // attachment server ip address to use
      </CP>
 </BBASCMD>
```

The following is an example response XML string:

```
 <BBASCMD>
      <CR>
           <PARTIDX>1003</PARTIDX> // enhance part index
           <IRD>0x0x960x720</IRD> // page rectangle enhanced in source
      coordinates
           <ERRNO>0</ERRNO> // 0 if no error, error value otherwise
           <SArDOMIDs>i0,</SArDOMIDs> // slide domID for which the requested
      response is for
      </CR>
 </BBASCMD>
```

The following is an example XML request for text of a ppt/pdf document that has already been rendered:

```
 <BBASCMD>
      <CD>NEXT</CD>
      <CP>
           <PARTIDX>999</PARTIDX> // request Full Content for main document
      </CP>
 </BBASCMD>
```

The following is an example response XML string:

```
 <BBASCMD>
      <CR>
           <PARTIDX>999</PARTIDX> // Full Content part index
            <ERRNO>0</ERRNO> // 0 if no error, error value otherwise
      </CR>
 </BBASCMD>
```

Additional implementation aspects are as follows:

The web server 15 preferably populates HTTP responses with attachment viewer meta-data (i.e. ip used, url, etc) obtained from the attachment server 18, and accepts attachment viewer meta-data if present in the HTTP request header. (i.e. server ip to use, part, dom id, etc) and passes this information to the attachment server 18.

An IM server 17 may also be configured to support responding with attachment server meta-data by accepting attachment server meta-data and using it during transcoding (i.e. server ip, part, dom id, etc).

Other device application modifications may be implemented, as follows:

A FileExplorer application on the device 12 may be configured to provide a "View" verb in the display menu if the file extension matches one of a plurality of supported file extensions (doc, xls, pdf etc.) When the "View" menu item is selected, the File Explorer application (or a plugin) contacts the proxy server 16 MDS in a similar way as the browser plugin in order to create a transmission channel, whereupon the attachment server 18 converts the file to a viewer-readable format (e.g. UCS) for downloading to the device 12 via proxy server 16. The attachment viewer 45 is preferably invoked immediately after the document data starts to be downloaded. It will be understood that the attachment viewer application 45 registers itself as a File Explorer plugin for the viewer-readable format (e.g. UCS).

As discussed above, the persistence model for the attachment viewer plug-in to the mobile device browser is configured so as not to rely on the initial data cached by the browser and to generate only the minimum number of wireless requests required for viewing a previously downloaded document. Also, by aligning the functionality of the attachment viewer 45 for both email and browser document viewing, additional advantages may be realized such as the document data chunks being part of low memory manager implementation on the device 12 and the ability to backup and restore document data.

As discussed above, the PersistOperation results in partially retrieved documents and meta-data being persisted to persistent store 23, such that partially persisted data and metadata can be re-loaded along with generation of data requests, regardless of the application or transport type used. If the native document is available at the original location, then more data can be retrieved using the original transport. More particularly, data chunks are serialized to the binary file, together with information about the original location and transport used (e.g. email, browser, IM, etc.). In one embodiment, the meta-data includes source document (i.e. attachment) location address within the server 18 and the transport mechanism (e.g. email, browser, IM, etc.) used to retrieve the attachment.

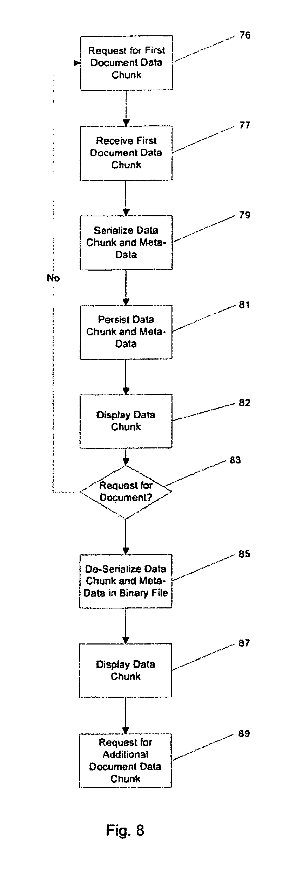

Additional details of the persistence of partial document data according to an embodiment are set forth in Figure 8. In response to a request for an initial document data chunk (76), the proxy server 16 processes the request as discussed above. Upon receipt of a first chunk of document data (77), the partial document data can be serialized (79) and persisted in a binary file in the persistent store 23 (81), or alternatively can be constructed in memory (and not persisted) as a stand-alone data structure (map) for the current session, so that all information needed to recreate the data structure in same state is converted to the binary array, and the initial data chunk is then displayed on the device 12 (82). The partial document data may be converted into a sequence of bits such that when the resulting series of bits is reread according to the serialization format, it can be used to create a semantically identical version of the original data chunks. By storing metadata such as the original transport type and original document address, additional chunks of attachment data may be requested at a later time. The meta-data can, for example, include server location, transport and document ID. For example, metadata can be a remote link for the document on the file system or on the Internet, or information about the original location of the document in an email system (email message identifier, "more part" identifier, etc.).

Thus, the first persisted data chunk contains all relevant information (i.e. meta-data) for later de-serializing of the data. When opened, it is de-serialized to recreate the memory data structure as it existed before saving (i.e. the same process as a backup/restore except that the serializing/de-serializing is performed on the partial document data and not on a hard disk).

The attachment viewer saving format preferably starts with a standard binary data header to indicate that the file is attachment viewer specific, followed by the type of document (e.g. attachment in an email, linked file, etc.), meta-data (e.g. remote link path on the web or on a remote machine) and then the binary document data. The binary data can contain multiple document data streams for the main document and embedded objects for documents from email or a single stream for linked documents.

As discussed above, three generic keys are used in accessing an atomic attachment in the persistent store 23: "message id" for email; "more part id" for email, and an "archive indicator" string indicating the archive index for a document in an archive). These values are used to initialize the docview display engine 43 and can have a different meaning for each calling application (like a hash code for the downloaded url) or can be generic, except for the archive indicator which has a predefined meaning. These values are also used to route a received data response to the active docview display engines showing the particular document.

Upon later requesting the document (83), the invoking application (e.g. email client, browser, IM, etc.) identifies the persistent store 23 and if the initial document data is not found in the store, the attachment viewer public classes (Figure 4) are used to issue a generic request (76) for the initial document data chunk (i.e. the attachment viewer (docview) registers itself as a plug-in on the device 12 and gets invoked by the calling application to send a request for data to the attachment server 18 via the MoreTransport class). As discussed above, the transport media can be any of email MORE, HTTP request, etc, provided that it accepts and transports to the attachment server an XML string descriptor and is able to receive a XML descriptor from the attachment server together with the binary ucs data chunk.

If the initial document data has been saved to the store 23, device 12 de-serializes the data, parses the metadata (e.g. the original file url) and constructs a new persistent store instance therefrom (85). The resulting document, including embedded objects, is then displayed (87), following which additional document data requests may be issued (89) incorporating the de-serialized meta-data.

It will be noted that saving and serializing (79, 81) is performed by the Attachment Viewer plug-in 45 to the invoking application, so that the document data can be saved and viewed from a variety of different invoking applications. The invoking applications are containers that implement defined interfaces and user interactions that follow common rules, but operate on the downloaded data chinks rather than native document data. Therefore, the attachment viewer 45 can use different transport types to issue data requests.

The method set forth above is not limited to downloading attachment data from an Attachment Server 18. Native attachment downloads, which send attachment binary data from an Enterprise Server rather than data chinks from the Attachment Server, may also be performed. Native attachment download is useful for portable electronic devices having Microsoft Office™-type programs available. Such programs are capable of displaying .doc and .ppt files, for example, using the appropriate Office-type program on the portable electronic device. Other types of data may also be downloaded using the method disclosed herein.

A specific embodiment has been shown and described herein. However, modifications and variations may occur to those skilled in the art. All such modifications and variations are believed to be within the sphere and scope of the present embodiment.

## Claims

1. A method for downloading an attachment for viewing on an attachment viewer (45) of a portable electronic device (12), the method comprising:
encapsulating, in a self-contained form, a DOM Document Object Model for a requested attachment (38); and,
communicating, in a self-contained form viewable on the attachment viewer, at least a portion of the requested attachment along with meta-data for subsequently locating said attachment, **characterized by** said meta-data including the source document location of said attachment.

2. The method as claimed in claim 1, wherein said self-contained form is Universal Content Stream format.

3. The method as claimed in claim 1 or 2, wherein said at least a portion is communicated either in sequence or out of sequence with at least a further portion of the requested attachment.

4. The method as claimed in any of claims 1 to 3, wherein said attachment is a multipage document.

5. The method as claimed in any of claims 1 to 4, wherein said portion and said meta-data are communicated using XML string descriptors.

6. The method of any of claims 1 to 5, wherein said meta-data further includes transport mechanism by which said at least a portion of said attachment is communicated.

7. The method of claim 6, wherein said source document location includes server location and document iD.

8. The method of any preceding claim, wherein said meta-data includes a remote link for said attachment on a file system or on the Internet.

9. The method of any preceding claim, wherein said meta-data includes information relating to location of the attachment in an email system.

10. The method of any preceding claim, wherein said meta-data includes a server ip address for locating said attachment.

11. The method of any preceding claim, wherein said portion and said meta-data are serialized and persisted according to the following format: a binary data header indicating said self-contained form and type of document; followed by said meta-data and then said portion in binary form.

12. The method of any preceding claim, wherein said portion and additional portions include one of either multiple document data streams for said attachment and embedded objects to an email or a single stream for linked document attachments.

13. A method of saving partial attachment data in a portable electronic device (12), said method comprising:
serializing (79) and persisting (81) an initial portion of an attachment and meta-data for subsequently locating said attachment on said portable electronic device;
displaying said initial portion (82) on said portable electronic device; and
responsive to a subsequent request for said attachment de-serializing said initial portion and said meta-data (85); displaying said initial portion (87) and sending a further data request for additional portions (89), wherein said further request includes said meta-data, **characterized by** said meta-data including the source document location of said attachment.

14. The method of claim 13, wherein said initial portion and additional portions of said attachment are encapsulated in a self-contained form viewable on the portable electronic device.

15. The method of claim 13 or 14, wherein said initial portion and said meta-data are serialized and persisted according to the following format: a binary data header indicating said self-contained form and type of document; followed by said meta-data and then said initial portion in binary form.

16. The method of any of claims 13 to 15, wherein said initial portion and said additional portions include one of either multiple document data streams for said attachment and embedded objects to an email or a single stream for linked document attachments.

## Patentansprüche

1. Ein Verfahren zu m Herunterladen eines Anhangs zu Anzeige auf einem Anhang-Betrachter (45) einer tragbaren elektronischen Vorrichtung (12), wobei das Verfahren aufweist:
Einkapselt, in einer in sich abgeschlossenen Form, eines DOMS (Document Object Model) für einen angeforderten Anhang (38); und
Kommunizieren, in einer in sich abgeschlossenen Form, die auf dem Anhang-Betrachter werden kann, zumindest eines Teils des gangeforderten Anfangs zusammen mit Metadaten zum nachfolgenden Lokalisieren des Anhangs, **dadurch gekennzeichnet, dass** die Metadaten die Queildokumentposition des Anhang umfassen.

2. Das Verfahren gemäß Anspruch 1, wobei die in sich abgeschlossene Form ein "Universal Content Stream"-Format ist.

3. Das Verfahren gemäß Anspruch 1 oder 2, wobei zumindest ein Teil entweder in Reihenfolge oder außer der Reihenfolge mit zumindest einem weiteren Teil des angeforderten kommuniziert wird.

4. Das Verfahren gemäß der Ansprüche 1 bis 3, wobei der Anhang ein mehrseitiges Dokument ist.

5. Das Verfahren gemäß einem der Ansprüche 1 bis 4, wobei der Teil und die Metadaten unter Verwendung von XML-String-Deskriptoren kommuniziert werden.

6. Das Verfahren einem der Ansprüche 1 bis 5, wobei die Metadaten weiter einen Transportmechanismus umfassen, durch den zumindest ein Teil des Anhang kommuniziert wird.

7. Das Verfahren gemäß Anspruch 6, wobei die Quelldokumentposition eine Server-Position und eine Dokument-ID umfasst,

8. Das Verfahren gemäß einem vorhergehenden Anspruch, wobei die Metadaten eine entfernte Verbindung für den Anhang auf einem Dateisystem oder im Internet umfassen.

9. Verfahren gemäß einem vorhergehenden Anspruch, wobei die Metadaten Information in Bezug auf die Position des Anhangs in einem Email-System umfassen.

10. Das Verfahren gemäß einem vorhergehenden Anspruch, wobei die Metadaten eine Server-IP-Adresse zum Lokalisieren des Anhangs umfassen.

11. Das Verfahren gemäß einem vorhergehenden Anspruch, wobei der Teil und die Metadaten in serieller Reihenfolge sind und Beibehalten werden gemäß dem folgenden Format: ein binärer Daten-Header, der die in sich abgeschlossene Form und einen Typ des Dokuments angibt; gefolgt von den Metadaten und dann dem Teil in binärer Form.

12. Das Verfahren gemäß einem vorhergehenden Anspruch, wobei der Teil und zusätzliche Teile eines umfassen aus entweder Mehrfach-Dokument-Datenströmen für den Anhang und eingebettete Objekte an ein Email oder einen einzigen Datenstrom für verknüpfte Dokumentanhänge.

13. Ein Verfahren zum Speichern von teilweisen Anhangsdaten in einer tragbaren elektronischen Vorrichtung (12), wobei das Verfahren aufweist:
in serielle Reihenfolge Bringen (79) und Beibehalten (81) eines Anfangsteils eines Anhangs und Metadaten zum nachfolgenden Lokalisieren des Anhangs auf der tragbaren elektronischen Vorrichtung;
Anzeigen des Anfangsteils (82) auf der tragbaren elektronischen Vorrichtung; und
in Reaktion auf eine nachfolgende Anforderung für den Anhang Deserialisieren des Anfangsteils und der Metadaten (85); Anzeigen des Anfangsteils (87) und Senden einer weiteren Datenanforderungfür zusätzliche Teile (89), wobei die weitere Anforderung die Metadaten umfasst, **dadurch gekennzeichnet, dass** die Metadaten die Quelldokumentposition des Anhangs umfassen.

14. Das Verfahren gemäß Anspruch 13, wobei der Anfangsteil und zusätzliche Teile des Anhangs in einer in sich abgeschlossenen Form eingekapselt sind, die auf der tragbaren elektronischen Vorrichtung betrachtet werden kann.

15. Das Verfahren Anspruch 13 oder 14, wobei der Anfangsteil und die Metadaten in serieller Reihenfolge sind und Beibehalten werden gemäß dem folgenden Format: ein binäre Daten-Header, der die in sich abgeschlossene Form und einen Typ des Dokuments angibt; gefolgt von den Metadaten und dann dem Anfangsteil in binärer Form.

16. Das Verfähren gemäß einem der Ansprüche 13 bis 15, wobei der Anfangsteil und die zusätzlichen Teile eines umfassen aus entweder Mehrfach-Dokument-Datenströmen für den Anhang und eingebettete Objekte an ein Email oder einen einzigen Datenstrom für verknüpfte Dokumentanhänge.

## Revendications

1. Procédé destiné à télécharger une pièce jointe pour la visualiser sur un visualiseur de pièces jointes (45) d'un dispositif électronique portable (12), le procécé comprenant le fait :
d'encapsuler, sous forme autonome, un Modèle Objet de Document DOM pour une pièce jointe demandée (38) ; et,
de communiquer, sous forme autonome pouvant être visualisée sur le visualiseur de pièces jointes, au moins une partie de la pièce jointe demandée conjointement avec des métadonnées pour localiser par la suite ladite pièce jointe, **caractérisé par** lesdites métadonnées comportant l'emplacement du document source de ladite pièce jointe.

2. Procédé tel que revendiqué dans la revendication 1, dans lequel ladite forme autonome est un Format de Flux de Contenu Universel.

3. Procédé tel que revendiqué dans la revendication 1 ou 2, dans lequel ladite au moins une partie est communiquée soit en séquence ou de manière non séquentielle avec au moins une partie supplémentaire de la pièce jointe demandée.

4. Procédé tel que revendiqué dans l'une des revendications 1 à 3, dans lequel ladite pièce jointe est un document multipage.

5. Procédé tel que revendiqué dans l'une des revendications 1 à 4, dans lequel ladite partie et lesdites métadonnées sont communiquées en utilisant des descripteurs de chaîne XML.

6. Procédé de l'une des revendications 1 à 5, dans lequel lesdites métadonnées comportent en outre un mécanisme de transport par lequel ladite au moins une partie de ladite pièce jointe est communiquée.

7. Procédé de la revendication 6, dans lequel ledit emplacement de document source comporte un emplacement de serveur et un ID document.

8. Procédé de l'une des revendications précédentes, dans lequel lesdites métadonnées comportent une liaison à distance pour ladite pièce jointe sur un système de fichiers ou sur Internet.

9. Procédé de l'une des revendications précédente, dans lequel lesdites métadonnées comportent des informations relatives à un emplacement de la pièce jointe dans un système de courrier électronique.

10. Procédé de l'une des revendications précédente, dans lequel lesdites métadonnées comportent une adresse IP de serveur pour localiser ladite pièce jointe.

11. Procédé de l'une des revendications précédentes, dans lequel ladite partie et lesdites métadonnées sont mises en série et conservées selon le format suivant : un en-tête de données binaires indiquant ladite forme autonome et le type de documents ; suivi par lesdites métadonnées, et ensuite de ladite partie sous forme binaire.

12. Procédé de l'une des revendications précédentes, dans lequel ladite partie et lesdites partie supplémentaires comportent, soit l'un des plusieurs flux de données de document pour ladite pièce jointe et des objets incorporés à un courrier électronique, soit un seul flux pour des pièces jointes de document liées.

13. Procédé de sauvegarde de données de pièce jointes partielles dans un dispositif électronique portable (12), ledit procédé comprenant le fait :
de mettre en série (79) et de conserver (81) une partie initiale d'une pièce jointe et de métadonnées pour localiser par la suite ladite pièce jointe sur ledit dispositif électronique portable ;
d'afficher ladite partie initiale (82) sur ledit dispositif électronique portable ; et
en réponse à une demande ultérieure de ladite pièce jointe de désérialiser ladite partie initiale et lesdites métadonnées (85) ; d'afficher ladite partie initiale (87) et d'envoyer une demande de données supplémentaire pour des parties supplémentaires (89), dans lequel ladite demande supplémentaire comporte lesdites métadonnées, **caractérisé par** lesdites métadonnées comportant l'emplacement de document source de ladite pièce jointe.

14. Procédé de la revendication 13, dans lequel ladite partie initiale et les lesdites parties supplémentaires de ladite pièce jointe sont encapsulées sous forme autonome pouvant être visualisée sur le dispositif électronique portable.

15. Procédé de la revendication 13 ou 14, dans lequel ladite partie initiale et lesdites métadonnées sont mises en série et conservées selon le format suivant : un en-tête de données binaires indiquant ladite forme autonome et le type de document ; suivi par lesdites métadonnées et ensuite de ladite partie initiale sous forme binaire.

16. Procédé de l'une des revendications 13 à 15, dans lequel ladite partie initiale et lesdites parties supplémentaires comportent, soit l'un des plusieurs flux de données de document pour ladite pièce jointe et des objets incorporés à un courrier électronique, soit un seul flux pour des pièces jointes de document liées.
